# EUROPEAN PATENT SPECIFICATION

(11) **EP 2 982 734 B1**
(45) Date of publication and mention of the grant of the patent: **27.01.2021**
(21) Application number: 15179335.3
(22) Date of filing: 31.07.2015
(51) Int. Cl.: C10L 1/02, C10L 1/06, C10G 3/00

(54) **FUEL MIXTURE, ESPECIALLY FOR SPARK IGNITION ENGINES**
TREIBSTOFFGEMISCH, INSBESONDERE FÜR FREMDZÜNDUNGSMOTOREN
MÉLANGE DE CARBURANT, EN PARTICULIER POUR DES MOTEURS À ALLUMAGE PAR ÉTINCELLE

(30) Priority: 08.08.2014 PL 40906814
(43) Date of publication of application: 10.02.2016
(73) Proprietor: Ekobenz Sp. z o. o., 20-204 Lublin (PL)
(72) Inventor: JABLONSKI, Stanislaw, 03-134 Warszawa (PL); GRZEGORCZYK, Wieslaw, 20-244 Lublin (PL); TARAS, Dariusz, 21-040 Swidnik (PL)
(74) Representative: Twardowska-Czerwinska, Aleksandra

(56) References cited:
- EP-A1- 2 940 103
- EP-A2- 1 914 291
- EP-A2- 2 568 033
- WO-A1-2007/061903
- WO-A1-2008/152199
- WO-A1-2011/159901
- WO-A2-02/38709
- US-A- 4 328 004
- US-A1- 2009 199 464
- US-A1- 2012 151 824
- US-A1- 2014 109 467
- G.A. ALDRIDGE, X.E. VERYKLOS, R. MUTHARASAN: "Recovery of Ethanol from fermentation broths by catalytic conversion to gasoline", IND. ENG. CHEM. PROCESS DES. DEV., vol. 23, 1984, pages 733-737, XP002752129,
- COSTA ENRIQUE ET AL: "ETHANOL TO GASOLINE PROCESS: EFFECT OF VARIABLES, MECHANISM, AND KINETICS", INDUSTRIAL AND ENGINEERING CHEMISTRY / PROCESS DESIGN AND DEVELOPMENT, AMERICAN CHEMICAL SOCIETY, WASHINGTON, DC, US, vol. 24, no. 2, 1 April 1985 (1985-04-01), pages 239-244, XP008105797, ISSN: 0019-7882, DOI: 10.1021/I200029A003
- WITHCRAFT DAVID R ET AL: "Recovery of ethanol frm fermentation broths by catalytic conversion to gasoline", INDUSTRIAL AND ENGINEERING CHEMISTRY PROCESS DESIGN AND DEVELOPMENT, EASTON, PA, US, vol. 22, 1 January 1983 (1983-01-01), pages 452-457, XP002418576, ISSN: 0196-4305, DOI: 10.1021/I200022A019

## Description

The subject of the present invention is a method for the preparation of a fuel mixture; for engines with spark ignition, that meets the greenhouse gases emission reduction criteria for biocomponents and biofuels used in transportation.

The source of classic obtaining methods of engine fuel mixtures are fractions from conservative, as well as destructive processing of crude oil. Fuels for engines with spark ignition usually contain mixture of fractions of different petroleum hydrocarbons with end distillation temperature up to 210°C. Ecological criteria and contemporary conditions of operation of internal combustion engines imposed a number of different requirements for engine fuel mixtures. Those criteria are met by fuel producers and at the same time utility properties of fuel mixtures are improved with known refining and performance improving additions packages.

Reduction of pollutant emissions by the transport sector and meeting the requirements of the 1996/62/WE air directive and 1999/30/WE permissible pollutants in the air directive and 9870/WE quality of petrol and diesel fuels directive forced the production and use of fuels, whose use is not associated with the emission of toxic fumes. Among other things, lead compounds are replaced by another group of additives, for example ethers, like in fuel compositions known from Polish descriptions PL 188659, PL 188651, PL 185160, PL 182985.

A variety of engine fuel composition, based on petroleum refining products that include different performance improving additions, but which do not meet the environmental protection requirements, especially the elimination of sulfur and benzene requirements. For example fuel composition containing even up to 150 mg/kg of sulfur and 1,0% (V/V) benzene are known from descriptions PL 202571, PL 200117, PL 192607, PL 192296, PL 191309.

According to patent PL 215047 gasoline of *Premium* and *Super* type with research octan number (RON) of respectively 95 and 98 and motor octane number (MON) of respectively 85 and 88, that include no more than 18%(V/V) olefins and up to 35%(V/V) aromas comprise mostly of reformate 30-65%(V/V) and 15-35%(V/V) of light isomerizate and 6-14%(V/V) of heavy isomerizate. Among other refining additions, in order to carry out atmospheric carbon dioxide reduction rate, those mixtures are composed with use of 5-10%(V/V) monovalent alcohols addition. The undoubted disadvantage of these fuels is the presence of benzene up to 1,0%(V/V) and up to 10mg/1kg of sulfur.

Cracked fractions have permanent and largest share of well-known gasoline compositions, which are assigned a tendency to pollute the combustion chambers. For example, a method for producing a composition for spark ignition engines from components of fractionation of cracking products is known from WO 2010066881 description. Many more fuel compositions are known that meet the criteria of minimal pollution contents in fumes, for example PL 208477, PL 204846, but having 100% of base petroleum hydrocarbons fraction, use of which does not provide the achievement of planned greenhouse gases emission reduction indicators in engine fuel group.

Those indicators can be reached by changing of the petroleum fuel components with components of vegetable and/or animal origin. According to know methods, the dominant role in the group of biocomponents for fuels for spark ignition engines is held by alcohols, particularly bioethanol.

A variety of defects of alcohols containing fuels are known. Among other, a long-term storage of the ethanol fuels is forbidden. The presence of ethanol in the fuel increases the corrosivity of the fuel. Introduction of ethanol also decreases the lubricating properties. Use of higher than 5%(V/V) ethanol additions to petroleum can cause problems with this component negative influence on contemporary used caulking materials in the fuel system; ethanol has a very negative effect on elastomers.

Introduction of aliphatic alcohols to engine fuels therefor requires the use of a number of additives, including stabilizing additives, wherein their role is also determined by refining composition. For example, according to description PL 197963, a fuel mixture of methanol in an amount of 65 to 92% by volume and no reformed gasoline in an amount of 5 to 32% by volume is subsidized by isobutyl alcohol. In the fuel according to invention PL/EP 2254975, that includes 50%(V/V) of base fuel, and up to 65%(V/V) of ethanol, 15-50%(V/V) of C4 alcohol (n-butanol, secondary butanol and iso-butanol). is added.

Another problem connected to use of ethanol fuels is the pressure of the vapors over the ethanol fuel composition. According to application P 329450 and description PL 194561 in order to decrease the vapor pressure of petroleum that includes ethanol or other aliphatic alcohols, an addition of higher alcohols, dialkyl ethers, ketones and other with 6-10 carbon atoms is used.

The presence of higher alcohols, in particular C4 alcohols is used in variety of other known engine fuels. For example, petroleum according to WO 2011159908 patent includes bio-based isobutanol.

In order to eliminate the operational defects of fuels that include aliphatic alcohols, It fuels containing a mixture of different alcohols are proposed, as for example petroleum composition known from WO 2004/113476 description, which consists of the base hydrocarbon fuel of a specified formula, that is containing 5 to 20% by volume of olefins, wherein no more than 5% by volume of olefins with at least 10 carbon atoms and no more than 5% by volume of aromas with at least 10 carbon atoms, with start distillation temperature in the range 24 to 45°C, and end distillation temperature no higher than 220°C and up to 10% by volume of at least one of the alcohols chosen from among methanol, ethanol, isopropanol and isobutanol.

According to Chinese patent CN 102816615 the main components of petroleum composition is a petroleum ether and 5% to 29,9%(V//V) methanol addition. In order to improve the lubricant performance the mixture is supplemented with, among others, addition of lubricant and 2,5% to 27%(V/V) toluene.

In order to eliminate the tendency to form sludge in the fuel system, detergent and dispersant additions are used, as for example in fuel compositions known from descriptions PL 214575, PL 203764, PL 195646 or PL 170272, which include imide or amine derivatives or alkylphenols.

Fuel compositions that include additions of biocomponent in a more primary form are known. For example, from description PL 204818, an addition that contains hydrated ethanol, fusel oils and aqueous fractions with lower boiling points as by-product of oxidation cyclohexane. Fuel mixtures of this type require a special preparation methods, for example dispersing operation carried out in a magnetic field and use of a relatively large amounts of emulsifier additives. Fuels containing low-processed bio-components, including bioesters, also require biocidal-stabilizing additions. For example a biocidal-stabilizing addition to fuels is know from application P 381274, which eliminates and controls microbial growth in the fuel. This addition contains a biocidal substance a stabilizer of biocidal substances, an oxidation inhibitor and a solvent.

The pressure of environmental requirements forces to find methods to completely eliminate or significantly reduce the sulfur compounds in gasoline components. For example, from description EP 1549595 (WO 2004033399) a sulfurless petroleum component is known, which is obtained by hydrogenation of olefins and degradation of sulfur by a hydrogen process in an additional, two-stage catalytic system. The component is a mixture of isoparaffins free of sulfur compounds, but also has several drawbacks, including petroleum origin and absence of aromatic compounds, which enhance the performance characteristics of fuel.

From descriptions of WO 2012161017 and EP 0976808 fuel compositions are known, that are characterized in lower NOₓ emissions in fumes and greater resistance to the formation of sludge in the combustion chamber, that contain a mixture of petroleum products from the catalytic processes processing. including aromatic compounds desired in the fuel. Those mixtures however include up to 20 ppm by volume of sulfur. Similar mixture, with high octane number, constituting a very complex composition of crude oil processing products is known from patent WO 2010066876.

The problem of enlarging the content of aromatic compounds in petroleum components of gasoline is solved by use of additional, costly and operatively-intensive catalyst operations, like for example in a method known from patent WO 2011130156. A major drawback of such methods is the simultaneous formation of large amounts of benzene which is undesirable in engine fuels.

In order to achieve the goal of reducing carbon dioxide emissions, currently used fuel for spark ignition engines are generally subsidized with bioalcohols, and fuels for compression-ignition engines - with esters of plant and/or animal origin.

Undeniable disadvantages of this bio-component are not only very unfavorable physicochemical properties but also the presence of various pollutants, including phosphorus and sulfur, as well as metals: sodium, potassium, calcium and magnesium. As was already mentioned, known fuel biocomponents for diesel engines, including FAME, require simultaneous subsidizing the fuel blends with special additive package.

As stated, these disadvantages can be removed by use of a mixture of engine fuel containing, instead of previously known biocomponents, among them bioalcohols, an addition of biocomponent with end distillation temperature up to 210°C, isolated from the product of catalytic conversion of alcohols C1 through C5, aldehydes and ketones and esters of lower fatty acids or mixtures thereof having a carbon number up to C5. It was also found that alternatively fuel mixtures that contain only hydrocarbons from bio-component product extracted from the catalytic conversion of alcohols may be used, subsidized by known components of oxygen, for example, ether type with 5 or more carbon atoms and refining additives.

Aldriade, G.A. et al., Ind. Eng. Chem. Process Des. Dev., 1984, 23, 733-737 describes a process for catalytically converting ethanol to hydrocarbons.

Costa, E. et al., Ind. Eng. Chem. Process Pes. Dev., 1985, 24, 239-244 also describes a process for the production of hydrocarbons. In the introduction it is briefly mentioned that the hydrocarbons might be competitive either through its direct use as fuel or as a gasoline additive.

Whitcraft, D.R. et al., Ind. Eng. Chem, Process Des. Dev., 1983, 22, 452-457 also describes a process for producting hydrocarbons by catalytic conversion of ethanol from fermentation broths.

The present invention relates to a method for preparation of a fuel mixture for spark-ignition engines according to claim 1.

The method according to the invention solves the problem of the sensitivity of the previously known fuels mixtures containing ethanol to the conditions of distribution and storage, negative influence of alcohols they contain to operating parameters of engines and improves the operating parameters of known fuel mixtures based on petroleum hydrocarbons, paraffinic and naphthenic. The product obtained with a method according to the invention is intended for direct use as a self-contained motor fuel meeting the criteria for reducing greenhouse gas emissions.

In a method according to the invention, a fuel mixture is formulated with known market fuels used as a base hydrocarbon fraction, and bio-component derived from the process of catalytic conversion of alcohols.

In a method according to the invention, the composition of the fuel mixture comprises a known oxygen compounds, preferably ethers, and particularly bioethers in amounts up to 15% by volume, and well-known antioxidant, detergent, anti-corrosion additives and other that improve the performance characteristics. A mixture prepared according to the invention comprises a bio-component that comprises up to 35%(V/V) of aromatic hydrocarbons, with sulfur, chlorine and metals, including lead, below the detection level of generally applicable analytical methods, benzene in amount lower than 0,2%(V/V) and ethanol lower than 0,17%(V/V), isolated from the product of catalytic conversion of ethanol, originating from the fermentation of alcohol or a mixture of ethanol and other alcohols having a carbon number C1 - C5, aldehydes and ketones and esters of lower fatty acids up to C5 or mixtures of them, where used biocomponent is derived from biomass, and contains hydrocarbons with carbon atoms only of no anthropogenic origin, furthermore the biocomponent is present in the amount up to 85%(V/V) relative to whole fuel mixture. Preferably, the mixture contains 5 to 10% (V/V) of biocomponent.

A fuel mixture prepared according to the method of the invention is devoid of the disadvantages of previously known fuels, inter alia containing aliphatic alcohols, including bio-alcohols, improves operational parameters of known fuel mixtures based on petroleum hydrocarbons, paraffinic and naphthenic.

It was found that the bio-component which is the product of the catalytic conversion of C1 to C5 alcohols or their derivatives and mixtures is a mixture of hydrocarbons very well miscible with hydrocarbon mixtures of known compositions of basic fuels. Aromatic hydrocarbons found in the biocomponent further improves the performance characteristics of fuel compared to the fuel compositions containing the known bio-components, such as bioethanol.

Due to the total lack of several undesirable components in biocomponent, including sulfur compounds, metals and benzene present in petroleum products, both biocomponent-based fuel, as well as the addition of bio-components to known petroleum fuels lowers pollution levels and can help to meet the environmental requirements for specified group of oil components.

It was also found that the bio-component composition contains hydrocarbons having a higher hydrogen content than the compositions of hydrocarbons of anthropogenic origin, causing the bio-component and the fuel mixtures prepared with a method according to the present invention to have a higher calorific value compared to the calorific value of the known engine fuels.

Fuel mixtures prepared with a method according to the invention meet the sustainability criteria and their application will contribute to achieve the required emission reduction of carbon dioxide, and stopping the increase of its content in the atmosphere. It should be emphasized that, contrary to bioethanol, content of bio-components in the fuel compositions prepared according to the present invention is not limited and does not cause adverse effects known from addition of aliphatic alcohols of hydrocarbon fuels, including bioethanol to fuels.

The use of bio-components for composing fuel mixtures, outside of the basic package of additives containing, inter alia, antioxidants, does not require any other special additives and procedures.

### Example 1 (step of making the bio-component)

A fraction with boiling point at 210°C was separated from the product to the catalytic conversion of a mixture of bioethanol with other organic compounds derived from biomass (having the composition: 0,2% (m/m) methanol + 87.5% (m/m) ethanol + 2.4% (m/m) propanol + 1.4% (m/m) butanol + 0 4% (m/m) of n-amyl alcohol + 0.3% (m/m) of ethyl acetate + 1.3% (m/m) of acetaldehyde + 6,5% (m / m) H₂O), which was carried out at a temperature of 300 - 308°C under a pressure of 10 bar and the dosing of the raw material at a rate of 0.70 kg_{EtOH}/h·kg_{cat}, on a bed of zeolite catalyst with a SiO₂/Al₂O₃ = 80, BET determined surface area = 363 m²/g and medium-sized crystallites identified by XRD method d=7.6 nm and for applying the recycle and contacting of the gaseous mixture remaining after separation of the liquid products of the reaction (at 70°C under a pressure of 5.0 bar) with a stream of feedstock directed to the catalyst node.

Although not claimed, a composition of the fuel mixture was prepared by mechanically mixing 20 kg (26.6 dm³) of the biocomponent extracted from the product of the catalytic conversion of mixtures of alcohols and their derivatives, having the characteristics indicated in Table 1 with 2.7 kg (3.6 dm³), ETBE and 22 cm³ Kerobit TP 26 (2,6-di-tert.-butylphenol) in toluene at a concentration of 10 g/dm³ (as an oxidation preventing stabilizer). A fuel mixture containing 88.1% by volume of bio-components was obtained, fulfilling the criteria of reducing greenhouse gas emissions, whose characteristics are summarized in Table 1.

**Table 1 Properties of biocomponent and fuel mixture according to the disclosure of example 1.**

| Property | Unit | Biocomponent | Fuel mixture |
|---|---|---|---|
| RON | | 92,4 | 96,9 |
| Density at temp. 15°C | kg/dm³ | 751 | 750 |
| DVPE vapour pressure | kPa | 64,7 | 61,8 |
| Sulfur content | mg/kg | <3,0 | <3,0 |
| Aromatics content | %(V/V) | 33,4 | 29,6 |
| Olefins content | %(V/V) | 9,6 | 8,5 |
| Benzene content | %(V/V) | 0,01 | 0,01 |
| Oxygen content | %(m/m) | <0,17 | 1,82 |
| Ethanol content | %(V/V) | <0,17 | <0,17 |
| Ether content | %(V/V) | <0,17 | 11,9 |
| Induction period | min | >360 | >360 |
| Calorific value | MJ/kg | 43,80 | 42,83 |
| Fractional composition: | | | |
| up to a temp. 70°C evaporates | %(V/V) | 23,2 | 24,0 |
| up to a temp. 100°C evaporates | %(V/V) | 42,9 | 45,3 |
| up to a temp. 150°C evaporates | %(V/V) | 76,8 | 80,8 |
| End distillation temp. | °C | 207,5 | 204,8 |

### Example 2

Fuel mixture was prepared by mechanically mixing 18 kg (24,0dm³) of the commercial E95 fuel with the parameters indicated in Table 2 and 0.966 kg (1,25dm³) of biocomponent with molar ratio of H:C = 1.9 and properties shown in Table 2 and 20 cm3 of the solution of Kerobit TP 26 (2,6-di-tert.-butyl-phenol) in toluene at a concentration of 10 g / dm3. A fuel mixture was received, containing 5% by volume of bio-component, obtained by the catalytic conversion of alcohols and fulfilling the criteria of reducing greenhouse gas emissions, whose characteristics are summarized in Table 2.

### Example 3

Fuel mixture was prepared by mechanically mixing 18 kg (24,0dm³) of the commercial E98 fuel with the parameters indicated in Table 2 and 0.966 kg (1,25dm³) of biocomponent with molar ratio of H:C = 1.9 and properties shown in Table 2 and 20 cm3 of the solution of Kerobit TP 26 (2,6-di-tert.-butyl-phenol) in toluene at a concentration of 10 g / dm3. A fuel mixture was received, containing 5% by volume of bio-component, obtained by the catalytic conversion of alcohols and fulfilling the criteria of reducing greenhouse gas emissions, whose characteristics are summarized in Table 2.

**Table 2 Properties of the bio-component and the fuel according to the invention of Examples 2 and 3**

| Property | Unit | Biocomponent | Base fraction | | Fuel according to the invention | |
|---|---|---|---|---|---|---|
| | | | From example 2 | From example 3 | From example 2 | From example 3 |
| RON | | 91,0 | 95,8 | 99,5 | 95,6 | 99 |
| Density at temp. 15°C | kg/dm³ | 770 | 750 | 749 | 751 | 750 |
| DVPE vapour pressure | kPa | 48,0 | 58,1 | 58,2 | 57,8 | 57,4 |
| Sulfur content | mg/kg | <3,0 | 7,3 | 7,4 | 7,1 | 7,1 |
| Aromatics content | %(V/V) | 30,7 | 26,4 | 30,8 | 27,7 | 31,3 |
| Olefins content | %(V/V) | 14,3 | 11,9 | 5,2 | 12,1 | 5,4 |
| Benzene content | %(V/V) | 0,04 | 0,57 | 0,61 | 0,53 | 0,57 |
| Oxygen content | %(m/m) | <0,17 | 2,52 | 2,49 | 2,39 | 2,37 |
| Ethanol content | %(V/V) | <0,17 | 4,7 | 3,5 | 4,5 | 3,3 |
| Ether content | %(V/V) | <0,17 | 5,0 | 7,6 | 4,8 | 7,2 |
| Induction period | min | >360 | >360 | >360 | >360 | >360 |
| Calorific value | MJ/kq | 43,88 | 42,95 | 42,81 | 42,99 | 42,87 |
| Fractional composition: | | | | | | |
| up to a temp. 70°C evaporates | %(V/V) | 20,0 | 36,7 | 32,5 | 35,5 | 31,2 |
| up to a temp. 100°C evaporates | %(V/V) | 37,9 | 55,4 | 54,4 | 54,2 | 53,2 |
| up to a temp. 150°C evaporates | %(V/V) | 76,5 | 84,5 | 87,1 | 83,7 | 86,2 |
| End distillation temp. | °C | 207,6 | 203,8 | 196 | 204 | 197,2 |

### Example 4

Fuel mixture was prepared by mechanically mixing 20,2 kg (27,0dm³) of the commercial E95 fuel with the parameters indicated in Table 3 and 2,3 kg (3,0 dm³) of biocomponent with molar ratio of H:C = 1.9 and properties shown in Table 3 and 37 cm³ of the solution of Kerobit TP 26 (2,6-di-tert.-butyl-phenol) in toluene at a concentration of 10 g / dm3. A fuel mixture was received, containing 10% by volume of bio-component, obtained by the catalytic conversion of alcohols and fulfilling the criteria of reducing greenhouse gas emissions, whose characteristics are summarized in Table 3.

### Example 5

Fuel mixture was prepared by mechanically mixing 20,2 kg (27,0dm³) of the commercial E98 fuel with the parameters indicated in Table 3 and 2,3 kg (3,0 dm³) of biocomponent with molar ratio of H:C = 1.9 and properties shown in Table 3 and 37 cm³ of the solution of Kerobit TP 26 (2,6-di-tert.-butyl-phenol) in toluene at a concentration of 10 g / dm3. A fuel mixture was received, containing 10% by volume of bio-component, obtained by the catalytic conversion of alcohols and fulfilling the criteria of reducing greenhouse gas emissions, whose characteristics are summarized in Table 3.

**Table 3 Properties of biocomponent and fuel mixtures according to the invention of example 4 and 5..**

| Property | Unit | Biocomponent | Base fraction | | Fuel according to the invention | |
|---|---|---|---|---|---|---|
| | | | From example 4 | From example 5 | From example 4 | From example 5 |
| RON | | 91,0 | 95,8 | 99,5 | 95,4 | 98,1 |
| Density at temp. 15°C | kg/dm³ | 770 | 750 | 749 | 752 | 751 |
| DVPE vapour pressure | kPa | 48,0 | 58,1 | 58,2 | 57,6 | 57,4 |
| Sulfur content | mg/kg | <3,0 | 7,3 | 7,4 | 6,9 | 7,1 |
| Aromatics content | %(V/V) | 30,7 | 26,4 | 30,8 | 28,5 | 30,1 |
| Olefins content | %(V/V) | 14,3 | 11,9 | 5,2 | 13,6 | 6,7 |
| Benzene content | %(V/V) | 0,04 | 0,57 | 0,61 | 0,50 | 0,50 |
| Oxygen content | %(m/m) | <0,17 | 2,52 | 2,49 | 2,40 | 2,26 |
| Ethanol content | %(V/V) | <0,17 | 4,7 | 3,5 | 4,7 | 3,3 |
| Ether content | %(V/V) | <0,17 | 5,0 | 7,6 | 4,4 | 6,8 |
| Induction period | min | >360 | >360 | >360 | >360 | >360 |
| Calorific value | MJ/kg | 43,88 | 42,95 | 42,81 | 43,04 | 43,02 |
| Fractional composition: | | | | | | |
| up to a temp. 70°C evaporates | %(V/V) | 20,0 | 36,7 | 32,5 | 34,2 | 28,3 |
| up to a temp. 100°C evaporates | %(V/V) | 37,9 | 55,4 | 54,4 | 53,0 | 51,8 |
| up to a temp. 150°C evaporates | %(V/V) | 76,5 | 84,5 | 87,1 | 82,7 | 85,0 |
| End distillation temp. | °C | 207,6 | 203,8 | 196 | 205,6 | 197,9 |

## Claims

1. Method for preparation of a fuel mixture for spark-ignition engines comprising a mixture of petroleum hydrocarbons with a final distillation temperature no higher than 210°C, oxygen compounds and refining additives, from biomass, **characterized in**
deriving ethanol or a mixture of ethanol and other alcohols having a carbon number C1-C5, aldehydes, ketones, esters of lower fatty acids up to C5 or mixtures of them all, from a fermentation of the biomass,
carrying out a catalytic conversion of the product of the fermentation, to hydrocarbons,
isolating a bio-component from the product of the catalytic conversion, whereas the bio-component is a mixture of synthetic hydrocarbons having a final distillation temperature up to 210°C, comprising up to 35% (V/V) of aromatic hydrocarbons, with a content of sulfur, chlorine, and metals, including lead, below the detection level of generally applicable analytical methods, with a benzene content of less than 0.2% (V/V) and an ethanol content less than 0.17% (V/V), wherein
the bio-component is derived from the biomass and contains hydrocarbons only with the carbon atoms of no anthropogenic origin,
and next
preparing the fuel mixture for spark-ignition engines comprising the petroleum hydrocarbons, the bio-component,
the oxygen compounds and
the refining additives selected from detergents, antioxidants, anti-corrosion additives and others that improve the performance characteristics,
wherein the biocomponent is present in an amount up to 85% by volume of the total fuel mixture.

2. The method according to claim 1, **characterized in that** the fuel mixture for spark-ignition engines comprises 5 to 10% by volume of the bio-component.

3. The method according to claim 1, **characterized in that** the fuel mixtures comprises, as the oxygen compound, ethers in amounts up to 15% by volume.

## Patentansprüche

1. Verfahren zur Herstellung eines Kraftstoffgemisches für Fremdzündungsmotoren, das ein Gemisch aus Erdölkohlenwasserstoffen mit einer Enddestillationstemperatur nicht höher als 210°C, Sauerstoffverbindungen und Raffinationszusätzen aus Biomasse enthält, **dadurch gekennzeichnet, dass**
Ethanol oder ein Gemisch aus Ethanol und anderen Alkoholen mit einer Kohlenstoffzahl von C1-C5, Aldehyden, Ketonen, Estern niederer Fettsäuren bis zu C5 oder Gemischen davon, aus einer Gärung der Biomasse erhalten wird,
eine katalytische Umwandlung des Gärungsprodukts in Kohlenwasserstoffe durchführt wird,
eine Biokomponente aus dem Produkt der katalytischen Umwandlung isoliert wird, wobei
die Biokomponente eine Mischung synthetischer Kohlenwasserstoffe mit einer Enddestillationstemperatur bis zu 210°C ist, die bis zu 35% (V/V) aromatische Kohlenwasserstoffe enthält, mit einem Gehalt an Schwefel, Chlor und Metallen, einschließlich Blei, unterhalb der Nachweisgrenze allgemein anwendbarer analytischer Methoden, mit einem Benzolgehalt von weniger als 0,2% (V/V) und einem Ethanolgehalt von weniger als 0,17% (V/V), wobei
die Biokomponente aus der Biomasse abgeleitet wird und Kohlenwasserstoffe nur mit den Kohlenstoffatomen ohne anthropogenen Ursprung enthält,
und zunächst
das Kraftstoffgemisch für Fremdzündungsmotoren hergestellt wird, das Erdölkohlenwasserstoffe, eine Biokomponente,
Sauerstoffverbindungen und
die aus Detergenzien, Antioxidantien, Korrosionsschutzzusätzen und anderen ausgewählten Veredelungszusätzen, die die Leistungseigenschaften verbessern, enthält,
wobei die Biokomponente in einer Menge von bis zu 85 Vol.-% des gesamten Kraftstoffgemisches vorhanden ist.

2. Verfahren nach Anspruch 1, **dadurch gekennzeichnet, dass** das Kraftstoffgemisch für Fremdzündungsmotoren 5 bis 10 Vol.-% der Biokomponente enthält.

3. Verfahren nach Anspruch 1, **dadurch gekennzeichnet, dass** das Kraftstoffgemisch als Sauerstoffverbindung Ether in Mengen bis zu 15 Vol.-% enthält.

## Revendications

1. Procédé de préparation d'un mélange de carburants pour moteurs à allumage commandé comprenant un mélange d'hydrocarbures pétroliers avec une température de distillation finale ne dépassant pas 210°C, de composés oxygénés et d'additifs de raffinage, à partir de la biomasse, **caractérisé en**
dérivation de l'éthanol ou d'un mélange d'éthanol et d'autres alcools ayant un nombre de carbone C1-C5, d'aldéhydes, de cétones, d'esters d'acides gras inférieurs jusqu'à C5 ou de mélanges de tous, à partir d'une fermentation de la biomasse,
réalisation d'une conversion catalytique du produit de la fermentation en hydrocarbures,
isolation d'un bio-composant du produit de la conversion catalytique, alors que le bio-composant est un mélange d'hydrocarbures synthétiques ayant une température de distillation finale jusqu'à 210°C, comprenant jusqu'à 35% (V/V) d'hydrocarbures aromatiques, avec une teneur en soufre, chlore et métaux, y compris le plomb, inférieure au niveau de détection des méthodes analytiques généralement applicables, avec une teneur en benzène inférieure à 0,2% (V/V) et une teneur en éthanol inférieure à 0,17% (V/V),
où
le bio-composant est dérivé de la biomasse et contient des hydrocarbures uniquement avec des atomes de carbone sans origine anthropique,
et ensuite,
en préparation du mélange de carburant pour moteurs à allumage commandé comprenant les hydrocarbures pétroliers, le bio-composant,
les composés oxygénés et
les additifs de raffinage choisis parmi les détergents, les antioxydants, les additifs anti-corrosion et autres qui améliorent les caractéristiques de la performance,
dans lequel le biocomposant est présent en une quantité allant jusqu'à 85% en volume du mélange de carburant total.

2. Procédé selon la revendication 1, **caractérisé en ce que** le mélange de carburants pour moteurs à allumage commandé comprend de 5 à 10% en volume du bio-composant.

3. Procédé selon la revendication 1, **caractérisé en ce que** les mélanges de carburants comprennent, comme composé oxygéné, des éthers en des quantités allant jusqu'à 15% en volume.
